# EUROPÄISCHE PATENTSCHRIFT

(11) **EP 3 123 643 B1**
(45) Veröffentlichungstag und Bekanntmachung des Hinweises auf die Patenterteilung: **30.06.2021**
(21) Anmeldenummer: 15717401.2
(22) Anmeldetag: 16.03.2015
(51) Int. Cl.: H04J 3/06, H04W 56/00, H04B 7/26, H04W 88/10

(54) **VERFAHREN AND VORRICHTUNGEN ZUR FEHLERTOLERANTEN UHRENSYNCHRONISATION IN DRAHTLOSEN TIME-TRIGGERED NETZWERKEN**
METHOD AND DEVICES FOR FAULT TOLERANT CLOCK SYNCHRONISATION IN WIRELESS TIME-TRIGGERED NETWORKS
PROCÉDÉ ET DISPOSITIVES POUR SYNCHRONISATION D'HORLOGE À TOLÉRANCE DE FAUTES DANS DES RESEAUX A COMMANDE DU TEMPS

(30) Priorität: 25.03.2014 AT 502182014
(43) Veröffentlichungstag der Anmeldung: 01.02.2017
(73) Patentinhaber: TTTech Industrial Automation AG, 1040 Wien (AT)
(72) Erfinder: KOPETZ, Hermann, A-2500 Baden (AT); POLEDNA, Stefan, A-3400 Klosterneuburg (AT)
(74) Vertreter: Patentanwaltskanzlei Matschnig & Forsthuber OG
(86) Internationale Anmeldenummer: PCT/AT2015/050065
(87) Internationale Veröffentlichungsnummer: WO 2015/143464

(56) Entgegenhaltungen:
- US-A1- 2003 177 154
- GADERER G ET AL: "A novel approach for Flexible Wireless Automation in Real-Time Environments", FACTORY COMMUNICATION SYSTEMS, 2008. WFCS 2008. IEEE INTERNATIONAL WORKSHOP ON, IEEE, PISCATAWAY, NJ, USA, 21. Mai 2008 (2008-05-21), Seiten 81-84, XP031344925, ISBN: 978-1-4244-2349-1
- Lars-Berno Fredriksson ET AL: "Advantages with a global clock in CAN systems", , 1. September 2001 (2001-09-01), Seiten 1-4, XP055192476, http://www.kvaser.com/about-can/white-pape rs-slide-shows Gefunden im Internet: URL:http://www.kvaser.com/wp-content/uploa ds/2014/08/global-clock-for-canbus.pdf [gefunden am 2015-05-29]
- STEINER WILFRIED ET AL: "Towards synchronous deterministic channels for the Internet of Things", 2014 IEEE WORLD FORUM ON INTERNET OF THINGS (WF-IOT), IEEE, 6. März 2014 (2014-03-06), Seiten 433-436, XP032589859, DOI: 10.1109/WF-IOT.2014.6803205 [gefunden am 2014-04-21]

## Beschreibung

Die Erfindung betrifft ein Verfahren zur drahtlosen fehlertoleranten Synchronisation von Uhren von Knotenrechner in einem verteilten Echtzeitsystem, welches verteilte Echtzeitsystem eine Anzahl von Arenen umfasst, wobei in jeder Arena eine Vielzahl von Knotenrechnern und eine oder mehrere Basisstationen angeordnet sind, und wobei die Knotenrechner mittels zeitgesteuerter drahtloser Datennachrichten mit der Basisstation oder den Basisstationen kommunizieren.

Offenbart wird weiterhin ein Knotenrechner zur drahtlosen Ubertragung von zeitgesteuerten Nachrichten in einem verteilten Echtzeitsystem, wobei das verteilte Echtzeitsystem eine Vielzahl von Knotenrechnern und eine oder mehrere Basisstationen, welche in einer Arena oder in mehreren Arenen angeordnet sind, und einen oder mehrere *Global Navigation System Signal Generatoren* (GNSSGs) umfasst.

Offenbart wird auch eine Basisstation zur drahtlosen Ubertragung von zeitgesteuerten Nachrichten in einem verteilten Echtzeitsystem, wobei das verteilte Echtzeitsystem eine Vielzahl von Knotenrechnern und eine oder mehrere Basisstationen, welche in einer Arena oder in mehreren Arenen angeordnet sind, und einen oder mehrere *Global Navigation System Signal Generatoren* (GNSSGs) umfasst.

Schließlich betrifft die Offenbarung noch ein verteiltes Echtzeitsystem umfassend eine Vielzahl von Knotenrechnern und eine oder mehrere Basisstationen, welche in einer Arena oder in mehreren Arenen angeordnet sind, und wobei das Echtzeitsystem einen oder mehrere *Global Navigation System Signal Generatoren* (GNSSGs) umfasst.

Die zeitgesteuerte Übertragung von Daten erfordert den Aufbau einer präzisen globalen Zeit, die in allen beteiligten Basisstationen und allen Knotenrechnern verfügbar sein muss. Vom Fortschreiten dieser globalen Zeit wird ein Trigger-Signal abgeleitet, das das Senden einer zeitgesteuerten Nachricht auslöst.

Die bestehenden Protokolle zur drahtlosen Datenübertragung, wie z.B. das weit verbreitete WiFi Protokoll [6], verwenden ein Frequenzband, das lizenzfrei von vielen Geräten gleichzeitig benutzt werden darf. Um die wechselseitige Beeinflussung der Geräte zu minimieren, wird entsprechend dem WIFI Protokoll von einem Gerät mit dem Senden einer Nachricht erst begonnen, wenn ein Sendekanal nicht belegt ist. Dadurch ergeben sich nicht vorhersehbare Verzögerungen des Nachrichtentransports. Diese nicht vorhersehbaren Verzögerungen der Nachrichten erschweren den Aufbau einer präzisen globalen Zeit.

Es ist eine Aufgabe der Erfindung, dieses Problem zu lösen.

Diese Aufgabe wird mit einem eingangs erwähnten Verfahren dadurch gelöst, dass erfindungsgemäß in jeder Arena mindestens ein *Global Navigation System Signal Generator* (GNSSG) vorhanden ist, wobei alle GNSSGs über ein drahtgebundenes *zeitgesteuertes Kommunikationssystem* (ZKS) mittels zeitgesteuerter Nachrichten miteinander kommunizieren, und wobei jeder GNSSG exakt zu Beginn jeder vollen und halben Minute der von dem zeitgesteuerten Kommunikationssystem zur Verfügung gestellten globalen ZKS Zeit mindestens eine GNS Nachricht sendet, und wobei ein Knotenrechner den Oszillator seiner Uhr mit mindestens einer empfangenen GNS Nachricht diszipliniert und so an der globalen ZKS Zeit teilnimmt, und wobei entsprechend einem für jeden Knotenrechner und jede Basisstation a *priori* individuell erstellten Zeitplan Trigger-Signale für das Senden von zeitgesteuerten Datennachrichten zwischen den Knotenrechnern und den Basisstationen auf ein oder vorzugsweise mehreren drahtlosen bidirektionalen Datenkanälen vom Fortschreiten der globalen ZKS Zeit abgeleitet werden.

Die vorliegende Erfindung beschreibt unter anderem ein neues Verfahren zur drahtlosen fehlertoleranten Uhrensynchronisation der Knotenrechner in einem verteilten Echtzeitsystem, in dem zeitgesteuerte Nachrichten zwischen einer Vielzahl von mobilen oder stationären Knotenrechnern und mehrerer stationären Basisstationen ausgetauscht werden.

Es werden mindestens zwei *unterschiedliche drahtlose Kommunikationssysteme* (auch als Übertragungssystem bezeichnet) eingesetzt, die in unterschiedlichen Frequenzbändern operieren. Ein unidirektionales Kommunikationssystem dient zur Übertragung von *Synchronisationsnachrichten* zum Aufbau der globalen Zeit und das andere bidirektionale Übertragungssystem dient zur Übertragung von *Datennachrichten.*

Die Basisstationen kommunizieren über ein zeitgesteuertes leitungsgebundenes Kommunikationssystem, z.B. TT Ethernet [9]. Ein solches *zeitgesteuertes Kommunikationssystem (ZKS)* baut eine globale Zeit, die *ZKS Zeit,* aller Basisstationen auf, wie z. B. in [9] beschrieben. Erfindungsgemäß wird die ZKS Zeit mittels zeitgesteuerter *Synchronisationsnachrichten* über ein drahtloses unidirektionales Kommunikationssystem (erstes Kommunikationssystem) an die Knotenrechner verteilt. Vorzugsweise ist die Frequenz und die Struktur der Synchronisationsnachrichten identisch mit den Nachrichten eines Globalen Navigationssystem (GNS), wie z.B. das Global Positioning System GPS, GALILEO oder GLONASS, um die Hardware der in großer Stückzahl produzierten kostengünstigen GNS Empfänger in den Knotenrechnern einsetzen zu können. Die Präzision [7, p.55], [11] dieser globalen Zeit liegt im Bereich von besser als 100 nsec. Unter Verwendung der globalen Zeit werden zeitgesteuerte Datennachrichten erfindungsgemäß über einen oder mehrere bidirektionale drahtlose *Kommunikationskanäle* (des zweiten drahtlosen Kommunikationssystems), die entsprechend einem oder mehreren der standardisierten drahtlosen Übertragungsverfahren funktionieren [6], übertragen.

Zusammenfassend beschreibt die vorliegende Erfindung unter anderem ein neues Verfahren zur drahtlosen fehlertoleranten Uhrensynchronisation der Knotenrechner in einem verteilten Echtzeitsystem in dem zeitgesteuerten Nachrichten zwischen einer Vielzahl von mobilen oder stationären Knotenrechnern und mehrerer stationären Basisstationen ausgetauscht werden. Die Basisstationen kommunizieren über ein leitungsgebundenes zeitgesteuertes Kommunikationssystem (ZKS) und bauen eine fehlertolerante globale Zeit, die ZKS Zeit auf. Zwischen den Basisstationen und den Knotenrechnern gibt es zwei unterschiedliche drahtlose Kommunikationssysteme, eines zur unidirektionalen Übertragung von Synchronisationsnachrichten der ZKS Zeit und ein weiteres zur bidirektionalen zeitgesteuerten Übertragung der Datennachrichten.

In keinem der zitierten Patente oder Patentanmeldungen [1-5] wird das vorgeschlagene Verfahren vorweggenommen GADERER G ET AL: "A novel approach for Flexible Wireless Automation in Real-Time Environments",FACTORY COMMUNICATION SYSTEMS, 2008. WFCS 2008. IEEE INTERNATIONAL WORKSHOP ON, IEEE, PISCATAWAY, NJ, USA, 21. Mai 2008 (2008-05-21), Seiten 81-84, ISBN: 978-1-4244-2349-1, offenbart ein Verfahren gemäß Oberbegriff des Anspruchs 1.

Bevorzugte Ausführungsformen des erfindungsgemäßen Verfahrens, des erfindungsgemäßen Knotenrechners, der erfindungsgemäßen Basisstation und des erfindungsgemäßen Echtzeitsystems, welche für sich alleine oder in beliebiger Kombination miteinander realisiert sein können, sind im Folgenden beschrieben:
- die globale ZKS Zeit ist fehlertolerant;
- eine Monitorkomponente überwacht die von einer GNSSG ausgehende Synchronisationsnachricht und stört bei Erkennung eines Fehlers die Synchronisationsnachricht durch ein Störsignal vorzugsweise innerhalb einer Bit-Zelle;
- jene Slots, in denen die Knotenrechner oder die Basisstationen eine Datennachricht senden, überlappen sich nicht;
- die eine oder die mehreren Basisstationen sind in einer Arena so angeordnet, dass es keinen Funkschatten zu den Knotenrechnern gibt;
- eine Datennachricht enthält einen Zeitstempel des globalen Zeitpunkts des Sendens der Datennachricht;
- eine von einem Knotenrechner gesendete eingehende Datennachricht wird von allen die Datennachricht empfangenden Basisstationen übernommen;
- die Struktur der zeitgesteuerten Datennachrichten entspricht dem TT-Ethernet Standard;
- ein drahtloser Datenkanal wird entsprechend dem IEEE Standard 802.11 (Wi-Fi) realisiert;
- ein drahtloser Datenkanal wird entsprechend dem IEEE Standard 802.15.1 (Bluetooth) realisiert;
- ein drahtloser Datenkanal wird entsprechend dem IEEE Standard 802.15.3 (UWB) realisiert;
- ein drahtloser Datenkanal wird entsprechend dem IEEE Standard 802.15.4 (Zigbee) realisiert;
- vorzugsweise ist in dem Knotenrechner Hardware, insbesondere ein Chipset zum Empfang von GNS Signalen enthalten;
- weiters ist es günstig, wenn in dem Knotenrechner Hardware, insbesondere ein oder mehrere Chipsets zur Unterstützung eines oder mehrerer der folgenden Kommunikationsprotokolle enthalten sind:
   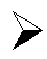 IEEE Standard 802.11 (Wi-Fi);
   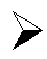 IEEE Standard 802.15.1 (Bluetooth);
   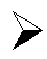 IEEE Standard 802.15.3 (UWB);
   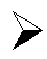 IEEE Standard 802.15.4 (Zigbee).
- weiters ist es von Vorteil, wenn in der Basisstation Hardware, insbesondere ein oder mehrere Chipsets zur Unterstützung eines oder mehrerer der folgenden Kommunikationsprotokolle enthalten sind:
   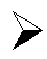 IEEE Standard 802.11 (Wi-Fi);
   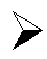 IEEE Standard 802.15.1 (Bluetooth);
   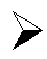 IEEE Standard 802.15.3 (UWB);
   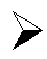 IEEE Standard 802.15.4 (Zigbee).
- ein verteiltes Echtzeitsystem enthält eine Vielzahl von oben beschriebenen Knotenrechnern;
- vorzugsweise ist vorgesehen, dass eine oder mehrere Basisstationen wie oben beschrieben ausgebildet sind, bei welchen ein GNSSG jeweils in eine Basisstation eingebaut ist;
- es kann auch vorgesehen sein, dass ein oder mehrere GNSSG jeweils mit einer Basisstation verbunden, insbesondere drahtgebunden verbunden sind.

### Begriffserklärungen

Im folgenden Abschnitt werden jene Begriffe erklärt, die in der detaillierten Beschreibung der Erfindung zur Anwendung gelangen und über die Standardbegriffe in der Echtzeitverarbeitung, wie sie z.B. im Lehrbuch [7] behandelt werden, hinausgehen.

Ein Raum, z.B. eine Produktionshalle, in dem sich die vielen verteilten *Knotenrechner* befinden, die über eine drahtlose Verbindung Daten mit den *Basisstationen* austauschen, wird als *Arena* bezeichnet. Eine große Produktionsanlage wird im Allgemeinen mehrere Produktionshallen, d.h. *Arenen* umfassen. In jeder Arena befinden sich eine Vielzahl von *Knotenrechnern* und eine oder mehrere *Basisstationen.*

Ein Kommunikationssystem kann gleichzeitig auf mehrere Kanälen Nachrichten senden, die sich durch die Frequenz oder Kodierung unterscheiden. Die Regeln, die bei der Übertragung von Nachrichten zu befolgen sind, bezeichnet man als *Protokoll.*

Eine Nachricht, die anwendungsspezifische *Payload Daten* enthält, wird als *Datennachricht* bezeichnet. Eine Nachricht die zum Aufbau einer globalen Zeit in den Knotenrechnern und den Basisstationen dient, wird als *Synchronisationsnachricht* bezeichnet. Die Anpassung des Stands und des Gangs des Oszillators an eine empfangene Synchronisationsnachricht bezeichnet man als *Disziplinierung des Oszillators.* Ein *zeitgesteuertes Kommunikationssystem* (ZKS) ist ein Kommunikationssystem, in dem Daten mittels zeitgesteuerter Nachrichten ausgetauscht werden. Alle Teilnehmer eines ZKS müssen über eine globale Zeit, die als *ZKS Zeit* bezeichnet wird, verfügen [7, S. 183].

Das Zeitintervall, das für das Senden einer *Datennachricht* vorgesehen, wird als *Slot* bezeichnet. Ein *Zeitplan,* der die Zeitpunkte des Sendens der zeitgesteuerten Nachrichten vorgibt, bestimmt die Lage der Slots auf der Zeitachse. Vom Fortschreiten der Zeit werden entsprechend dem Zeitplan *Trigger-Signale* abgeleitet, die das Senden der zeitgesteuerten Datennachrichten auslösen.

Eine Datennachricht, die von der Basisstation zu den Knotenrechnern gesendet wird, wird als *ausgehende Datennachricht* bezeichnet. Eine Datennachricht, die von einem Knotenrechner zu den Basisstationen gesendet wird, wird als *eingehende Datennachricht* bezeichnet.

Ein globales Navigationssystem (GNS) ist ein System von Satelliten, das periodisch präzise Synchronisationsnachrichten zur Erde sendet. Ein Beispiel für GNS ist das amerikanische GPS, das europäische GALILEO oder das russische GLANOSS. Ein *Global Navigation System Signal Generator* (GNSSG) ist ein Gerät, das die Synchronisationsnachrichten eines oder mehrere GNS Kanäle nachbildet und in eine Arena sendet.

Die Synchronisationsnachrichten des GPS Systems sind 1500 Bit lang und werden exakt zu Beginn jeder halben Minute mit einer Datenrate von 50 Bit/Sekunde ausgestrahlt.

Die Logik vieler gängiger Kommunikationsprotokolle ist in hochintegrierten Halbleiterbauelementen realisiert, die als *Chipsets* bezeichnet werden.

Im Folgenden ist die Erfindung an Hand der Zeichnung näher erörtert. In dieser zeigt
Fig. 1 den Aufbau von zwei Arenen, und
Fig. 2 die Überwachung einer Synchronisationsnachricht durch eine Monitorkomponente.

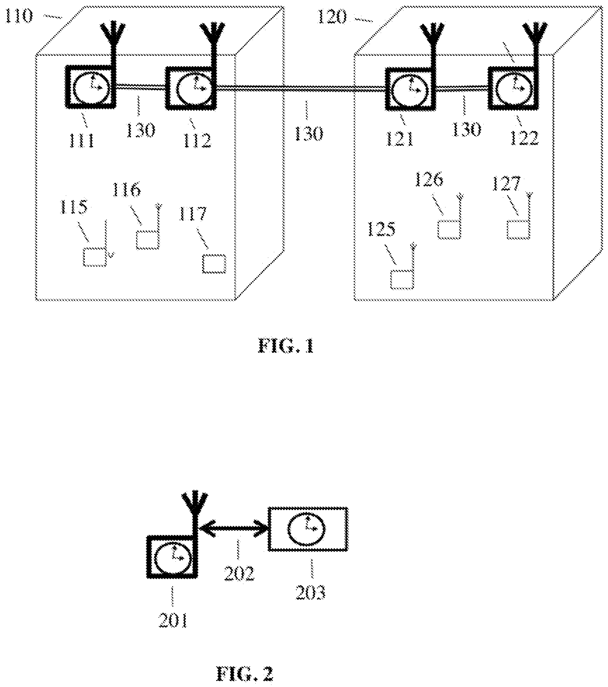

In Fig. 1 ist eine erste Arena durch den Quader **110** und eine zweite Arena durch den Quader **120** dargestellt. In der Arena **110** befinden sich zwei Basisstationen **111** und **112** und in der Arena **120** befinden sich zwei Basisstationen **121** und **122.** Um den Ausfall von Basisstationen zu beherrschen, können in einer Arena auch mehr als zwei Basisstationen angeordnet sein.

In der ersten Arena **110** befinden sich drei Knotenrechner **115, 116** und **117.** In der zweiten Arena **120** befinden sich drei Knotenrechner **125,126** und **127.**

Die vier Basisstationen **111, 112, 121,** und **122** sind durch einen redundanten leitungsgebundenen Kommunikationskanal **130** verbunden. Durch den Austausch von leitungsgebundenen Synchronisationsnachrichten über den redundanten Kommunikationskanal **130** wird eine fehlertolerante globale Zeit, *die ZKS Zeit,* von den vier Basisstationen **111, 112, 121,** und **122** aufgebaut.

Jede Basisstation sendet drahtlose Nachrichten auf zwei unterschiedlichen drahtlosen Kommunikationssystemen zu den Knotenrechnern, und zwar senden die Basisstationen **111** und **112** in der Arena **110** an die drei Knotenrechner **115, 116** und **117** und die Basisstationen **121** und **122** in der Arena **120** an die drei Knotenrechner **125, 126** und **127.** Die ein, zwei oder mehr Basisstationen in einer Arena sind vorzugsweise so angeordnet, dass kein Knotenrechner im Funkschatten aller Basisstationen liegt. Vorzugsweise empfängt jeder Knotenrechner die Nachrichten von mehreren Basisstationen, so dass der Ausfall einer Basisstation toleriert werden kann.

Auf dem ersten drahtlosen, unidirektionalen Kommunikationssystem werden Synchronisationsnachrichten der *ZKS Zeit* an die Knotenrechner gesendet. Die Struktur dieser Synchronisationsnachrichten entspricht dem Standard eines *Globalen Satellitennavigationssystems* (GNS). Erfindungsgemäß werden die Synchronisationsnachrichten nicht von einem Satelliten, sondern von einem *Global Navigation System Signal Generator* (GNSSG), der bei der gezeigten Ausführungsform in eine Basisstation der Arena integriert ist, gesendet. Ein, zwei, mehrere oder alle der GNSSG können auch außerhalb der zugeordneten Basisstation angeordnet sein, und sind mit dieser dann jeweils drahtgebunden verbunden. Die Feldstärke des GNSSG Signals in der Arena ist so zu wählen, dass die Feldstärke der Satellitensignale überlagert wird. Ein GNSSG kann auch gleichzeitig mehrere Synchronisationsnachrichten der ZKS Zeit, die sich durch ihre Kodierung unterscheiden, an die Knotenrechner senden. Sobald ein Knotenrechner eine Synchronisationsnachricht erhält, diszipliniert er seinen lokalen Oszillator, um ihn mit der globalen Zeit zu synchronisieren. Bei Ausfall von einer oder mehrerer Synchronisationsnachrichten nimmt der Knotenrechner die globale ZKS-Zeit von seinem disziplinierten lokalen Oszillator.

Wie in Fig. 2 gezeigt, kann der Zeitpunkt des Sendens der von einem GNSSG **201** ausgehenden Synchronisationsnachrichten von einer Monitorkomponente **203,** die über eine Drahtverbindung **202** mit dem GNSSG verbunden ist, überprüft werden. Wenn die Monitorkomponente **203** unter Bezugnahme auf ihre lokale Uhr feststellt, dass die Synchronisationsnachricht von dem GNSSG **201** zu einem falschen Zeitpunkt gesendet wird, so stört die Monitorkomponente **203** die ausgehende Nachricht vorzugsweise innerhalb einer Bit-Zelle, so dass jeder empfangende Knotenrechner den Fehler erkennen kann und die Nachricht verwirft.

Auf dem zweiten, drahtlosen bidirektionalen Kommunikationssystem werden zeitgesteuerte *Datennachrichten* zwischen den Basisstationen und den Knotenrechnern ausgetauscht. Vorzugsweise entspricht die Struktur jeder Datennachricht dem TTEthernet Standard und enthält einen Zeitstempel der ZKS Zeit, so dass Kopien von Datennachrichten erkannt werden können. Vorzugsweise entspricht das Protokoll zum Senden der Datennachrichten einem oder mehreren der folgenden IEEE Standards: dem IEEE Standard 802.11 (Wi-Fi), dem IEEE Standard 802.15.1 (Bluetooth), dem IEEE Standard 802.15.3 (UWB), oder dem IEEE Standard 802.15.4 (Zigbee) [6].

Eine zeitgesteuerte Datennachricht wird gesendet, sobald die globale ZKS-Zeit beim Sender (d.i. eine Basisstation oder ein Knotenrechner) den Sendezeitpunkt der Nachricht, der in einem *a priori* erstellten Zeitplan enthalten ist, erreicht. Jede Datennachricht wird von jeder Basisstation der Arena gesendet. Die Slots, auf denen Datennachrichten gesendet werde, dürfen sich nicht überlappen. Eine von einem Knotenrechner gesendete Datennachricht wird von allen Basisstationen, die die Nachricht empfangen, übernommen.

Die Verwendung von standardisierten Protokollen ermöglicht es, kostengünstige *Chipsets* beim Aufbau der Knotenrechner und der Basisstationen einzusetzen.

Durch die präzise zeitgesteuerte Übertragung von Datennachrichten können die verfügbaren Kommunikationskanäle besser ausgelastet werden. Die vorliegende Erfindung ist daher von großer wirtschaftlicher Bedeutung.

Weiterer relevanter Stand der Technik:
Lars-Berno Fredriksson ET AL: "Advantages with a global clock in CAN systems", 1. September 2001 (2001-09-01), Seiten 1-4, http://www.kvaser.com/about-can/white-papers-slide-shows.
STEINER WILFRIED ET AL: "Towards synchronous deterministic channels for the Internet of Things", 2014 IEEE WORLD FORUM ON INTERNET OF THINGS (WF-IOT), IEEE, 6. März 2014 (2014-03-06), Seiten 433-436.

### Zitierte Dokumente:

[1] US Patent No. 7,120,092. del Prado Pavon , et al. *System and method for performing clock synchronization of nodes connected via a wireless local area network.* Granted on October 10, 2006
[2] US Patent No. 7,499,444. Bennett. *Method for clock synchronization of wireless 1394 buses for nodes connected via IEEE 802.11 a*/*b WLAN.* Granted on March 3, 2009.
[3] US Patent No. 8,145,247. Fullam. *Clock synchronization for a wireless communications system.* Granted on March 27, 2012.
[4] US Patent 8,427,987. Stocks. *System and method for time synchronized beacon enabled wireless personal area network communication.* Granted on April 23, 2013.
[5] US Patent Application 20110068973, Humphreys et al.. *Assimilating GNSS Signals to Improve Accuracy, Robustness and Resistance to Signal Interference.* Published March 24, 2011.
[6] Lee et al. A Comparative Study of Wireless Protocols: Bluetooth, UWB, ZigBEE, and Wi-Fi. Proc. of the 3rd Annual Conference of the IEEE Industrial Electronics Society. Taipeh. Pp.46-51. IEEE Press. 2007.
[7] Kopetz, H. Real-Time Systems, Design Principles for Distributed Embedded Applications. Springer Verlag. 2011.
[8] Hiertz, G.R.. The IEEE 8092.11 Universe. IEEE Communication Magazine. Jan 2010. pp. 62-70. IEEE Press. 2001 , M., Ed. System of Systems Engineering - Innovations for the 21st Centur., J. Wiley & Sons.2009.
[9] SAE Standard AS6802 von TT Ethernet. URL: http://standards.sae.org/as6802
[10] RT-WiFi: Wei et al. Real-Time High-Speed Communication Protocol for Wireless Cyber-Physical Control Applications. Proc. of RTSS 2013.Pp. 140-149. Vancouver. IEEE Press
[11] Lombardi, G., The Use of GPS Disciplined Oscillators as Primary Frequency Standards for Calibration and Metrology Laboratories. Measure. Vol. 3, No. 3, Pp. 56-65. September 2008.

## Patentansprüche

1. Verfahren zur drahtlosen fehlertoleranten Synchronisation von Uhren von Knotenrechnern in einem verteilten Echtzeitsystem, welches verteilte Echtzeitsystem eine Anzahl von Arenen (110, 120) umfasst, wobei in jeder Arena (110, 120) eine Vielzahl von Knotenrechnern (115, 116, 117, 125, 126, 127) und eine oder mehrere Basisstationen (111, 112, 121, 122) angeordnet sind, und wobei die Knotenrechner (115, 116, 117, 125, 126, 127) mittels zeitgesteuerter drahtloser Datennachrichten mit der Basisstation oder den Basisstationen kommunizieren,
wobei GNS ein Globales Navigationssystem bezeichnet,
**dadurch gekennzeichnet, dass**
in jeder Arena (110, 120) mindestens ein *Global Navigation System Signal Generator,* GNSSG (201), vorhanden ist, wobei alle GNSSGs (201) über ein drahtgebundenes *zeitgesteuertes Kommunikationssystem,* ZKS, mittels zeitgesteuerter Nachrichten miteinander kommunizieren, und wobei jeder GNSSG (201) exakt zu Beginn jeder vollen und halben Minute der von dem zeitgesteuerten Kommunikationssystem zur Verfügung gestellten globalen Zeit des ZKS, im weiteren als ZKS-Zeit bezeichnet, mindestens eine GNS Nachricht sendet, und wobei ein Knotenrechner (115, 116, 117, 125, 126, 127) einen Oszillator seiner Uhr mit mindestens einer empfangenen GNS Nachricht diszipliniert und so an der globalen ZKS-Zeit teilnimmt, und wobei entsprechend einem für jeden Knotenrechner (115, 116, 117, 125, 126, 127) und jede Basisstation (111, 112, 121, 122) *a priori* individuell erstellten Zeitplan Trigger-Signale für das Senden von zeitgesteuerten Datennachrichten zwischen den Knotenrechnern und den Basisstationen auf einem oder vorzugsweise mehreren drahtlosen bidirektionalen Datenkanälen vom Fortschreiten der globalen ZKS-Zeit abgeleitet werden.

2. Verfahren nach Anspruch 1, **dadurch gekennzeichnet, dass** die globale ZKS-Zeit fehlertolerant ist.

3. Verfahren nach Anspruch 1 oder 2, **dadurch gekennzeichnet, dass** eine Monitorkomponente die von einer GNSSG ausgehende Synchronisationsnachricht überwacht und bei Erkennung eines Fehlers die Synchronisationsnachricht durch ein Störsignal vorzugsweise innerhalb einer Bit-Zelle stört.

4. Verfahren nach einem der Ansprüche 1 bis 3, **dadurch gekennzeichnet, dass** jene Slots, in denen die Knotenrechner oder die Basisstationen eine Datennachricht senden, sich nicht überlappen.

5. Verfahren nach einem der Ansprüche 1 bis 4, **dadurch gekennzeichnet, dass** die eine oder die mehreren Basisstationen in einer Arena so angeordnet sind, dass es keinen Funkschatten zu den Knotenrechnern gibt.

6. Verfahren nach einem der Ansprüche 1 bis 5, **dadurch gekennzeichnet, dass** eine Datennachricht einen Zeitstempel des globalen Zeitpunkts des Sendens der Datennachricht enthält.

7. Verfahren nach einem der Ansprüche 1 bis 6, **dadurch gekennzeichnet, dass** eine von einem Knotenrechner gesendete eingehende Datennachricht von allen die Datennachricht empfangenden Basisstationen übernommen wird.

8. Verfahren nach einem der Ansprüche 1 bis 7, **dadurch gekennzeichnet, dass** die Struktur der zeitgesteuerten Datennachrichten dem TT-Ethernet Standard entspricht.

9. Verfahren nach einem der Ansprüche 1 bis 8, **dadurch gekennzeichnet, dass** ein drahtloser Datenkanal entsprechend dem IEEE Standard 802.11, Wi-Fi, realisiert wird.

10. Verfahren nach einem der Ansprüche 1 bis 9, **dadurch gekennzeichnet, dass** ein drahtloser Datenkanal entsprechend dem IEEE Standard 802.15.1, Bluetooth, realisiert wird.

11. Verfahren nach einem der Ansprüche 1 bis 10, **dadurch gekennzeichnet, dass** ein drahtloser Datenkanal entsprechend dem IEEE Standard 802.15.3, UWB, realisiert wird.

12. Verfahren nach einem der Ansprüche 1 bis 11, **dadurch gekennzeichnet, dass** ein drahtloser Datenkanal entsprechend dem IEEE Standard 802.15.4, Zigbee, realisiert wird.

## Claims

1. A method for wireless fault-tolerant synchronization of clocks of node computers in a distributed real-time system, which distributed real-time system comprises a number of arenas (110, 120), wherein in each arena (110, 120) a plurality of node computers (115, 116, 117, 125, 126, 127) and one or more base stations (111, 112, 121, 122) are arranged, and wherein the node computers (115, 116, 117, 125, 126, 127) communicate with the base station or base stations by means of time-triggered wireless data messages, wherein GNS designates a Global Navigation System,
**characterized in that**
in each arena (110, 120) there is provided at least one *Global Navigation System Signal Generator,* GNSSG (201), wherein all GNSSGs (201) communicate with each other by means of time-triggered messages via a wired time-triggered communication system, ZKS, and wherein each GNSSG (201) transmits at least one GNS message exactly at the beginning of each full and half minute of the global time of the time controlled communication system provided by the ZKS, hereinafter referred to as ZKS time, and wherein a node computer (115, 116, 117,125, 126, 127) disciplines an oscillator of its clock with at least one received GNS message, thus participating in the global ZKS time, and wherein, according to a schedule individually established *a priori* for each node computer (115, 116, 117, 125, 126, 127) and each base station (111, 112, 121, 122), trigger signals for transmission of time-triggered data messages between the node computers and the base stations through one or preferably several wireless bidirectional data channels are derived from the advancement of the global ZKS time.

2. The method according to claim 1, **characterized in that** the global ZKS time is fault tolerant.

3. The method according to claim 1 or 2, **characterized in that** a monitor component monitors the synchronization message originating from a GNSSG and, upon detection of an error, interferes with the synchronization message by means of a jamming signal preferably within a bit cell.

4. The method according to any one of claims 1 to 3, **characterized in that** those slots in which the node computers or the base stations transmit a data message do not overlap.

5. The method according to any one of claims 1 to 4, **characterized in that** the one or more base stations are arranged in an arena such that there is no radio shadow to the node computers.

6. The method according to any one of claims 1 to 5, **characterized in that** a data message contains a timestamp of the global time of transmission of the data message.

7. The method according to any one of claims 1 to 6, **characterized in that** an incoming data message sent by a node computer is taken over by all base stations receiving the data message.

8. The method according to one of claims 1 to 7, **characterized in that** the structure of the time-triggered data messages corresponds to the TT-Ethernet standard.

9. The method according to any one of claims 1 to 8, **characterized in that** a wireless data channel is realized according to IEEE standard 802.11, Wi-Fi.

10. The method according to any one of claims 1 to 9, **characterized in that** a wireless data channel is realized according to IEEE standard 802.15.1, Bluetooth.

11. The method according to any one of claims 1 to 10, **characterized in that** a wireless data channel is realized according to IEEE standard 802.15.3, UWB.

12. The method according to any one of claims 1 to 11, **characterized in that** a wireless data channel is implemented according to IEEE standard 802.15.4, Zigbee.

## Revendications

1. Procédé de synchronisation sans fil tolérante aux pannes d'horloges d'ordinateurs de nœud dans un système en temps réel distribué, lequel système en temps réel distribué comporte un certain nombre d'arènes (110, 120), une pluralité d'ordinateurs de nœud (115, 116, 117, 125, 126, 127) et une ou plusieurs stations de base (111, 112, 121, 122) étant disposés dans chaque arène (110, 120), et les ordinateurs de nœud (115, 116, 117, 125, 126, 127) communiquant avec la station de base ou les stations de base au moyen de messages de données sans fil déclenchés dans le temps, GNS désignant un système de navigation mondial,
**caractérisé en ce que**
dans chaque arène (110, 120) au moins un générateur de signaux de système de navigation global, GNSSG (201), est présent, tous les GNSSG (201) communiquant entre eux au moyen de messages déclenchés dans le temps via un système de communication déclenché dans le temps câblé, ZKS, et chaque GNSSG (201) transmettant au moins un message GNS exactement au début de chaque minute et chaque demi-minute du temps global du système de communication déclenché dans le temps fourni par le ZKS, ci-après appelé temps ZKS, et un ordinateur de nœud (115, 116, 117, 125, 126, 127) disciplinant un oscillateur de son horloge avec au moins un message GNS reçu, ainsi participant au temps global ZKS, et que, selon un programme qui est établi *a priori* individuellement pour chaque ordinateur de nœud (115, 116, 117,125, 126, 127) et chaque station de base (111, 112, 121, 122), des signaux de déclenchement pour envoyer des messages de données temporisés entre les ordinateurs de nœud et les stations de base par un ou de préférence plusieurs canaux de données bidirectionnels sans fil sont dérivés de l'avancement du temps ZKS global.

2. Procédé selon la revendication 1, **caractérisé en ce que** le temps global ZKS est tolérant aux pannes.

3. Procédé selon la revendication 1 ou 2, **caractérisé en ce qu'**un composant de surveillance surveille le message de synchronisation provenant d'un GNSSG et, lors de la détection d'une erreur, interfère avec le message de synchronisation par un signal de brouillage de préférence dans une cellule binaire.

4. Procédé selon l'une quelconque des revendications 1 à 3, **caractérisé en ce que** les créneaux dans lesquels les ordinateurs de nœud ou les stations de base transmettent un message de données ne se chevauchent pas.

5. Procédé selon l'une quelconque des revendications 1 à 4, **caractérisé en ce que** la ou les stations de base sont disposées dans une arène telle qu'il n'y a pas d'ombre radio vers les ordinateurs des nœuds.

6. Procédé selon l'une quelconque des revendications 1 à 5, **caractérisé en ce qu'**un message de données comprend un horodatage de l'heure globale de transmission du message de données.

7. Procédé selon l'une quelconque des revendications 1 à 6, **caractérisé en ce qu'**un message de données entrant envoyé par un ordinateur de nœud est repris par toutes les stations de base recevant le message de données.

8. Procédé selon l'une quelconque des revendications 1 à 7, **caractérisé en ce que** la structure des messages de données temporisés correspond à la norme TT-Ethemet.

9. Procédé selon l'une quelconque des revendications 1 à 8, **caractérisé en ce qu'**un canal de données sans fil est mis en œuvre selon la norme IEEE 802.11, Wi-Fi.

10. Procédé selon l'une quelconque des revendications 1 à 9, **caractérisé en ce qu'**un canal de données sans fil est réalisé selon la norme IEEE 802.15.1, Bluetooth.

11. Procédé selon l'une quelconque des revendications 1 à 10, **caractérisé en ce qu'**un canal de données sans fil est réalisé selon la norme IEEE 802.15.3, UWB.

12. Procédé selon l'une quelconque des revendications 1 à 11, **caractérisé en ce qu'**un canal de données sans fil est réalisé selon la norme IEEE 802.15.4, Zigbee.
